# EUROPEAN PATENT APPLICATION

(11) **EP 3 309 872 A1**
(43) Date of publication of application: **18.04.2018**
(21) Application number: 17196188.1
(22) Date of filing: 12.10.2017
(51) Int. Cl.: H01M 4/136, H01M 4/58, H01M 4/133, H01M 4/62, H01M 4/1397, H01M 4/1393, H01M 10/0525, H01M 10/0567, H01M 10/0587

(54) **LITHIUM IRON PHOSPHATE POWER BATTERY AND METHOD FOR PREPARING THE SAME**

(30) Priority: 14.10.2016 CN 201610900168
(71) Applicant: Optimum Battery Co., Ltd., Shenzhen City, Guangdong 518118 (CN)
(72) Inventor: JIAO, Qi fang, Shenzhen, Guangdong 518118 (CN); SUN, Chang jun, Shenzhen, Guangdong 518118 (CN)
(74) Representative: Fry, Emma Leland

(57) **Abstract**

A lithium iron phosphate power battery includes: a battery case; a battery cell in the battery case, including: a positive plate including a positive current collector and a positive active material formed thereon, the positive active material including lithium iron phosphate having a primary particle diameter of no more than 200nm and a D50 of no more than 3µm, a mass content of the lithium iron phosphate in the positive active material being 93-96%, a solid content of the positive active material being 50-65%; a negative plate including a negative current collector and a negative active material formed thereon, the negative active material including a graphite having a D50 of 10-15µm, a mass content of the graphite in the negative active material being 92-95%, a solid content of the negative active material being 50-65%; a separator between the positive plate and the negative plate; and an electrolyte.

## Description

### BACKGROUND OF THE INVENTION

### Field of the Invention

The present application generally relates to batteries and, more particularly, to a lithium iron phosphate power battery and a method for preparing the same.

### Description of the Related Art

With continuous improvement of green environment consciousness, electric vehicles have been increasingly popular in people's daily life. Lithium iron phosphate power batteries are core energy storage devices for electric vehicles. At present, the energy density of existing lithium iron phosphate battery material is low. Even a highly automated steel shell lithium iron phosphate battery has an energy density of less than 110Wh/kg, which affects the endurance mileage of the electric vehicles.

In addition, the lithium iron phosphate itself has poor electric conductivity and slow lithium ion diffusion rate, which may lead to poor low temperature performance. The discharge capacity of an existing lithium iron phosphate battery at -20°C is only 40% to 70% as that of the discharge capacity at normal temperature. Existing lithium iron phosphate battery even cannot be discharged or discharge capacity is close to 0% at -40°C, which seriously affect the promotion and operation of electric vehicles in extremely cold areas.

In view of the foregoing, what is needed, therefore, is to provide a novel lithium iron phosphate power battery and a method for preparing the same, so as to overcome the disadvantages as discussed above.

### SUMMARY OF THE INVENTION

One object of the present application is to provide a lithium iron phosphate power battery having high energy density and desirable low temperature performances and a method for preparing the same.

According to one embodiment of the present application, a lithium iron phosphate power battery including:
a battery case;
a battery cell received in the battery case, the battery cell including:
   a positive plate, including a positive current collector and a positive active material formed on the positive current collector, the positive active material including lithium iron phosphate having a primary particle diameter of no more than 200nm and a D50 of no more than 3µm, a mass content of the lithium iron phosphate in the positive active material being 93-96%, and a solid content of the positive active material being 50-65%;
   a negative plate, including a negative current collector and a negative active material formed on the negative current collector, the negative active material including a graphite having a D50 of 10-15µm, a mass content of the graphite in the negative active material being 92-95%, and a solid content of the negative active material being 50-65%; and
   a separator between the positive plate and the negative plate; and
an electrolyte filled in the battery case.

One embodiment of the present application provides a method for preparing a lithium iron phosphate power battery, including the steps of:
1) preparing a positive active material: adding lithium iron phosphate and positive conductive agent into a dry mixer, carrying out a first stirring; adding 30-60% of a positive glue solution and carrying out a second stirring, and scraping material; and adding residual glue solution and carrying out a third stirring, wherein the positive glue solution is obtained by adding an oily binder PVDF and an oily solvent NMP into a double planetary mixer and obtaining a mixture, and stirring and dispersing the mixture uniformly for 1-2h;
2) preparing a negative active material: adding an aqueous binder and a deionized water into a double planetary mixer and dispersing, adding graphite powder into the double planetary mixer and stirring and scraping material, and adding a negative conductive agent and continuing stirring under vacuum;
3) preparing a positive plate and a negative plate: coating the prepared positive active material on the positive current collector and coating the prepared negative active material on the negative current collector respectively, and obtaining the positive plate and the negative plate after baking; and
4) assembling a battery: winding the positive plate, a separator and the negative plate and obtaining a battery cell, setting the battery cell in a battery case and injecting an electrolyte into the battery case, and obtaining a lithium iron phosphate power battery.

Compared with the prior art, the lithium iron phosphate power battery according to the present application has high energy density and excellent low temperature performances.

### BRIEF DESCRIPTION OF THE DRAWINGS

FIG. 1 depicts an exemplary cross-sectional view of a battery cell for use in a lithium iron phosphate power battery according to one embodiment of the present application;
FIG. 2 depicts an exemplary perspective view of a lithium iron phosphate power battery according to one embodiment of the present application;
FIG. 3 depicts a discharge curve of a lithium iron phosphate power battery according to one embodiment of the present application at -20°C; and
FIG. 4 depicts a discharge curve of a lithium iron phosphate power battery according to one embodiment of the present application at -40°C.

### DETAILED DESCRIPTION OF THE PREFERRED EMBODIMENTS

In order that the objects, technical solution and technical effects of the present invention can be understood more clearly, the present invention will be described in more detail with reference to the accompanying drawings and examples. It should be understood that the specific examples described herein are illustrative only and are not intended to limit the present invention.

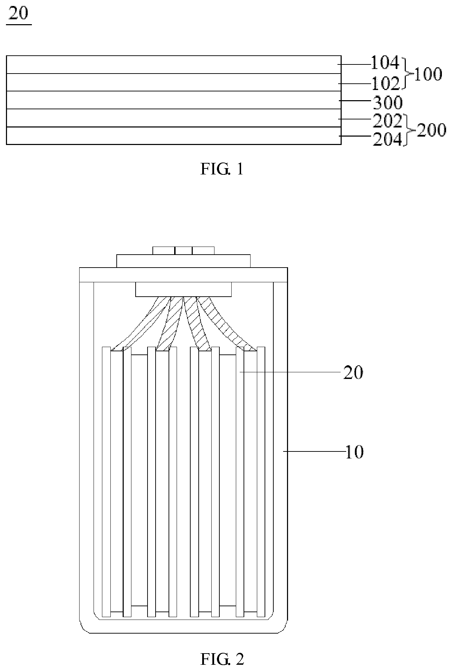

Referring to FIGS. 1 and 2, according to one embodiment of the present application, a lithium iron phosphate power battery including:
a battery case 10;
a battery cell 20 received in the battery case 10, the battery cell 20 including:
   a positive plate 100, including a positive current collector 102 and a positive active material 104 formed on the positive current collector 102, the positive active material 104 including lithium iron phosphate having a primary particle diameter of no more than 200nm and a D50 of no more than 3µm, a mass content of the lithium iron phosphate in the positive active material 104 is 93-96%, and a solid content of the positive active material 104 is 50-65%;
   a negative plate 200, including a negative current collector 202 and a negative active material 204 formed on the negative current collector 202, the negative active material 204 including a graphite having a D50 of 10-15µm, a mass content of the graphite in the negative active material 204 is 92-95%, and a solid content of the negative active material 204 is 50-65%; and
   a separator 300 between the positive plate 100 and the negative plate 200; and
an electrolyte filled in the battery case 10.

Specifically, the positive active material includes a positive glue solution. The positive glue solution includes an oily binder and an oily solvent. The oily binder is HSV900, 5130 or equivalent polyvinylidene fluoride (PVDF) binder. The oily solvent is N-methylpyrrolidone (NMP). The solid content of the positive glue solution is 5-12%.

Specifically, the positive active material includes a positive conductive agent. The positive conductive agent is carbon nanotube (CNT) and/or graphene. A mass content of the positive conductive agent in the positive active material is 1-3%. The negative active material includes a negative conductive agent. The negative conductive agent is selected from a group consisting of conductive carbon black (SP), Ketjenblack (CB), carbon nanotube (CNT), graphene and carbon nanofiber (VGCF). The mass content of the negative conductive agent in the negative active material is 1-3%.

Specifically, the negative active material includes an aqueous binder and a deionized water. The aqueous binder is selected from a group consisting of water dispersion of acrylonitrile copolymer, polyacrylic acid, carboxymethylcellulose and styrene-butadiene rubber, and a mass content of the aqueous binder in the negative active material is 2.5-4%.

Specifically, the electrolyte includes a lithium salt, a solvent and an additive. The concentration of the lithium salt is 1-1.3mol/L. The solvent is selected from two to four of propylene carbonate (PC), ethyl acetate (EA), propyl acetate (PA) and ethyl propionate (EP). The mass content of the solvent in the electrolyte is 70-85%. The additive is selected from a group consisting of fluorinated ethylene carbonate (FEC), propane sultone (PS), bistrifluoromethanesulfonimidate lithium (LiTFSi), vinylene carbonate (VC) and ethylene sulfate (DT). The mass content of the additive in the electrolyte is 0.5-5%.

In the lithium iron phosphate power battery according to the present application, the positive active material contains lithium iron phosphate coated with ultrafine carbon having a particle diameter of no more than 200nm. The conductivity of the lithium iron phosphate material is improved. Conventional spherical particle conductive agent (conductive carbon black, Ketjenblack, etc.) is completely or partially replaced by linear or planar carbon nanotube or graphene. The linear or planar carbon nanotube or graphene are distributed on the surface of the positive active material particles and gaps between the positive active material particles, which can play a role as a "bridge". The active material particles can be connected desirably, to provide a desirable path for the transmission of the lithium ions, reduce the resistance in the diffusion process, and increase the conductive capability of the positive active material under low temperature.

In the lithium iron phosphate power battery according to the present application, the negative active material contains graphite having desirable layer structure, crystal spacing, electrical conductivity and ion diffusion rate, which can improve the electrical conductivity and ion diffusion rate, reduce the impedance of lithium ion migration. By selecting a low temperature co-solvent with low melting point, low viscosity, high dielectric constant and high electrochemical stability, and by adjusting the proportion of each solvent component, the conductivity of the electrolyte at low temperature can be improved. Via selecting appropriate film forming additives, the SEI film formed can keep stable even be charged and discharged at low temperature, which can improve the charge and discharge performances at low temperature.

One embodiment of the present application provides a method for preparing a lithium iron phosphate power battery, including the steps of:
1) preparing a positive active material: adding lithium iron phosphate and positive conductive agent into a dry mixer and carrying out a first stirring; adding 30-60% of a positive glue solution, carrying out a second stirring, and scraping material; and adding residual glue solution and carrying out a third stirring, wherein the positive glue solution is obtained by adding an oily binder PVDF and an oily solvent NMP into a double planetary mixer and obtaining a mixture, and stirring and dispersing the mixture uniformly for 1-2h;
2) preparing a negative active material: adding an aqueous binder and a deionized water into a double planetary mixer and dispersing; adding graphite powder into the double planetary mixer and stirring and scraping material; and adding a negative conductive agent and continuing stirring under vacuum;
3) preparing a positive plate and a negative plate: coating the prepared positive active material on the positive current collector and coating the prepared negative active material on the negative current collector respectively, and obtaining a positive plate and a negative plate after baking; and
4) assembling a battery: winding the positive plate, a separator and the negative plate and obtaining a battery cell, setting the battery cell in a battery case and injecting an electrolyte into the battery case, and obtaining a lithium iron phosphate power battery.

Specifically, in the first stirring of step 1), the revolution frequency of the dry mixer is 35-40Hz, the autorotation speed is 6000-8000rpm, and the stirring time is 0.5-2h. In the second stirring of step 1), the revolution frequency of the dry mixer is 40-45 Hz, the autorotation speed is 4000-5000rpm, and the stirring time is 10-30min. In the third stirring of step 1), the revolution frequency of the dry mixer is 40-45Hz, the autorotation speed is 4000-5000rpm, and the stirring time is 2-3h.

Specifically, the dispersing time of the double planetary mixer in step 2) is 0.5-1.5h, the stirring time after adding the graphite powder is 10-30min, the stirring time under vacuum is 0.5-1.5h, and the viscosity of the negative active material obtained in step 2) is 500-2000 mPas.

Specifically, the positive conductive agent is carbon nanotubes (CNT) and/or graphene, and the mass content of the positive conductive agent in the positive active material is 1-3%. The negative conductive agent is selected from a group consisting of conductive carbon black (SP), Ketjenblack (CB), carbon nanotubes (CNT), graphene and carbon nanofiber (VGCF), and the mass content of the negative conductive agent in the negative active material is 1-3%.

The electrolyte contains a lithium salt, a solvent and an additive. The concentration of the lithium salt is 1-1.3mol/L. The solvent is selected from two to four of ethyl acetate (EA), propylene carbonate (PC), propyl acetate (PA) and ethyl propionate (EP). The mass content of the solvent in the electrolyte is 70-85%. The additive is selected from a group consisting of fluorinated ethylene carbonate (FEC), propane sultone (PS), bistrifluoromethanesulfonimidate lithium (LiTFSi), vinylene carbonate (VC) and ethylene sulfate (DT), and the mass content of the additive in the electrolyte is 0.5-5%.

In the method for preparing a lithium iron phosphate power battery according to the present application, the lithium iron phosphate hard to be dispersed is mixed with the carbon nanotube/graphene conductive agent powder, and then is mixed with the glue solution. Via high viscosity kneading beating technology, desirable dispersion of the nanoscale lithium iron phosphate and the conductive agent can be realized. The lithium iron phosphate power battery has the low temperature performance as that of the nanoscale lithium iron phosphate material, and the charge and discharge performances of the battery at low temperature is improved remarkably.

### EXAMPLE

1) Preparing a positive active material: adding lithium iron phosphate powder and positive conductive agent powder into a dry mixer and dispersing the mixture for 0.5-2h at a high speed, wherein the revolution frequency of the dry mixer is 35-40Hz, the autorotation speed is 6000-8000rpm. Adding 30-60% of the positive glue solution into the uniformly mixed powder, wherein the revolution frequency of the dry mixer is 40-45Hz, the autorotation speed is 4000-5000rpm, stirring for 10-30min and scraping material; adding the residual glue solution and stirring for 2-3h, wherein the revolution frequency of the dry mixer is 40-45Hz, the autorotation speed is 4000-5000rpm, the viscosity of the positive active material is 4000-10000mPas; removing the bubbles via stirring and vacuum pumping, the rotation of the dry mixer does not open, while the revolution frequency is 15-20Hz. The positive glue solution is obtained via adding oily binder PVDF and oily solvent NMP into the double planetary mixer, stirring and mixing uniformly for 1-2h.
2) preparing a negative active material: adding an aqueous binder and a deionized water into a double planetary mixer and dispersing for 0.5-1.5h, adding graphite powder into the double planetary mixer and stirring for 10-30min, scraping material, adding negative conductive agent SP and continuing to vacuum stirring for 0.5-1.5h, and adding deionized water to adjust the viscosity to 500-2000 mPas.
3) preparing a positive plate and a negative plate: coating the prepared positive active material on the positive current collector, coating the prepared negative active material on the negative current collector respectively, and obtaining the positive plate and the negative plate after baking; and
4) assembling a battery: winding the positive plate, a separator and the negative plate and obtaining a battery cell, setting the battery cell in a battery case and injecting an electrolyte into the battery case, and obtaining a lithium iron phosphate power battery.

According to the standard method of Chinese new national standard of "lithium ion battery for electric vehicles", the low temperature test of the lithium iron phosphate power battery according to the embodiment of the present application is carried out, and the test results are shown as following.

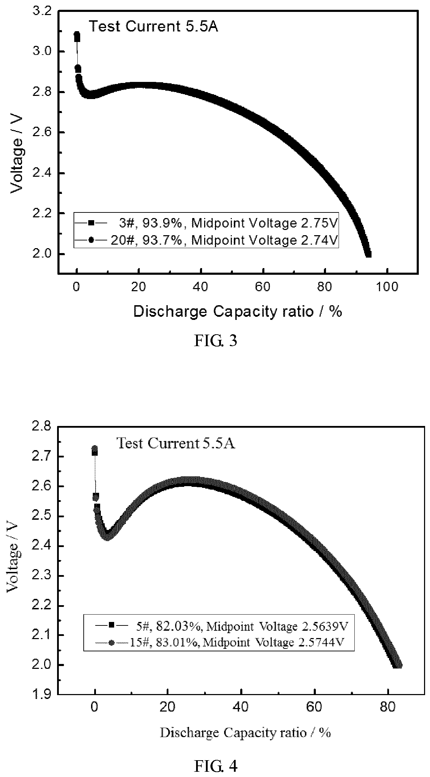

Table 1 shows the capacity and energy density data of the lithium iron phosphate power battery according to one embodiment of the present application. Table 2 shows the charging data of the lithium iron phosphate power battery according to one embodiment of the present application at -20°C; FIG. 3 depicts a discharge curve of a lithium iron phosphate power battery according to one embodiment of the present application at -20°C. FIG. 4 depicts a discharge curve of a lithium iron phosphate power battery according to one embodiment of the present application at -40°C.

**TABLE 1**

| Battery number | Battery weight /g | Battery capacity /mAh | Battery energy density Wh/kg |
|---|---|---|---|
| 1# | 147.3 | 5532 | 120.1792261 |
| 2# | 146.9 | 5525 | 120.3539823 |
| 3# | 146.3 | 5522 | 120.7819549 |
| 4# | 146.9 | 5525 | 120.3703704 |
| 5# | 145.4 | 5567 | 122.519945 |
| 6# | 147 | 5585 | 121.5616923 |
| 7# | 147.3 | 5565 | 120.9289692 |
| 8# | 146.2 | 5561 | 121.7098694 |
| 9# | 146.3 | 5566 | 121.7776562 |
| 10# | 145.9 | 5637 | 123.6353667 |
| 11# | 146.5 | 5628 | 122.9324232 |
| 12# | 145.5 | 5547 | 121.9958763 |
| 13# | 145 | 5511 | 121.622069 |
| 14# | 146.2 | 5542 | 121.3023256 |
| 15# | 146.1 | 5536 | 121.2539357 |
| 16# | 147 | 5569 | 121.229932 |
| 17# | 145.6 | 5543 | 121.8241758 |
| 18# | 145 | 5521 | 121.8427586 |
| 19# | 146.3 | 5546 | 121.3069036 |
| 20# | 145.8 | 5519 | 121.1303155 |

**TABLE 2**

| Battery number | Capacity/ mAh | Charging at low temperature of -20°C | |
|---|---|---|---|
| | | Charging constant current ratio at 0.5C | Charging constant current ratio at 1C |
| 1# | 5.532 | 76.90% | 57.41% |
| 2# | 5.525 | 78.40% | 61.76% |

As shown in Table 2, when the lithium iron phosphate power battery according to one embodiment of the present application is charged with 0.5C constant current at -20°C, the charging constant current ratio is more than 75%. When the battery is charged with 1C constant current at -20°C, the charging constant current ratio is more than 55%. Referred to FIGS. 3 and 4, when the lithium iron phosphate power battery according to one embodiment of the present application is discharged with a current of 5.5Ah at -20°C, the lithium iron phosphate power battery can discharge a rated capacity of no less than 93%. When the lithium iron phosphate power battery is discharged with a current of 5.5Ah at -40°C, the lithium iron phosphate power battery can discharge a rated capacity of no less than 80%. It can be seen from the test results, the lithium iron phosphate power battery according to one embodiment of the present application has high energy density and excellent low temperature performance.

It should be understood that, the above examples are only used to illustrate the technical concept and feature of the present invention, and the purpose thereof is familiarize the person skilled in the art to understand the content of the present invention and carry it out, which cannot restrict the protection scope of the present invention based on above. Any equivalent transformation or modification made in the spirit of the present invention should all be included within the protection scope of the present invention.

## Claims

1. A lithium iron phosphate power battery, comprising:
a battery case (10);
a battery cell (20) received in the battery case (10), the battery cell (20)comprising:
a positive plate (100), comprising a positive current collector (102) and a positive active material (104) formed on the positive current collector (102), the positive active material (104) comprising lithium iron phosphate having a primary particle diameter of no more than 200nm and a D50 of no more than 3µm, a mass content of the lithium iron phosphate in the positive active material (104) being 93-96%, and a solid content of the positive active material (104) being 50-65%;
a negative plate (200), comprising a negative current collector (202) and a negative active material (204) formed on the negative current collector (202), the negative active material (204) comprising a graphite having a D50 of 10-15µm, a mass content of the graphite in the negative active material (204) being 92-95%, and a solid content of the negative active material (204) being 50-65%; and
a separator (300) between the positive plate (100) and the negative plate (200); and
an electrolyte filled in the battery case (10).

2. The lithium iron phosphate power battery according to claim 1, wherein the positive active material comprises a positive glue solution, and a solid content of the positive glue solution is 5-12%.

3. The lithium iron phosphate power battery according to claim 2, wherein the positive glue solution comprises an oily binder of polyvinylidene fluoride binder and an oily solvent of N-methylpyrrolidone,

4. The lithium iron phosphate power battery according to claim 1, wherein the positive active material comprises a positive conductive agent of carbon nanotubes and/or graphene, and a mass content of the positive conductive agent in the positive active material is 1-3%.

5. The lithium iron phosphate power battery according to claim 1, wherein the negative active material comprises a negative conductive agent selected from a group consisting of conductive carbon black, Ketjenblack, carbon nanotubes, graphene and carbon nanofibers, and a mass content of the negative conductive agent in the negative active material is 1-3%.

6. The lithium iron phosphate power battery according to claim 1, wherein the negative active material comprises an aqueous binder and a deionized water, the aqueous binder is selected from a group consisting of water dispersion of acrylonitrile copolymer, polyacrylic acid, carboxymethylcellulose and styrene-butadiene rubber, and a mass content of the aqueous binder in the negative active material is 2.5-4%.

7. The lithium iron phosphate power battery according to claim 1, wherein the electrolyte comprises a lithium salt, a solvent and an additive, a concentration of the lithium salt is 1-1.3mol/L, and the solvent is selected from two to four of propylene carbonate, ethyl acetate, propyl acetate, and ethyl propionate, a mass content of the solvent in the electrolyte is 70-85%; the additive is selected from a group consisting of bistrifluoromethanesulfonimidate lithium, fluorinated ethylene carbonate, propane sultone, vinylene carbonate and ethylene sulfate, and a mass content of the additive in the electrolyte is 0.5-5%.

8. A method for preparing a lithium iron phosphate power battery, comprising the steps of:
1) preparing a positive active material: adding lithium iron phosphate and positive conductive agent into a dry mixer and carrying out a first stirring; adding 30-60% of a positive glue solution, carrying out a second stirring, and scraping material; and adding residual glue solution and carrying out a third stirring, wherein the positive glue solution is obtained by adding an oily binder PVDF and an oily solvent NMP into a double planetary mixer and obtaining a mixture, and stirring and dispersing the mixture uniformly for 1-2h;
2) preparing a negative active material: adding an aqueous binder and a deionized water into a double planetary mixer and dispersing, adding graphite powder into the double planetary mixer and stirring, scraping material, adding a negative conductive agent and continuing stirring under vacuum;
3) preparing a positive plate and a negative plate: coating the prepared positive active material on the positive current collector and coating the prepared negative active material on the negative current collector respectively, and obtaining the positive plate and the negative plate after baking; and
4) assembling a battery: winding the positive plate, a separator and the negative plate and obtaining a battery cell, setting the battery cell in a battery case and injecting an electrolyte into the battery case, and obtaining a lithium iron phosphate power battery.

9. The method for preparing a lithium iron phosphate power battery according to claim 8, wherein in the first stirring of step 1), a revolution frequency of the dry mixer is 35-40Hz, an autorotation speed is 6000-8000rpm and a stirring time is 0.5-2h.

10. The method for preparing a lithium iron phosphate power battery according to claim 8, wherein in the second stirring of step 1), a revolution frequency of the dry mixer is 40-45Hz, an autorotation speed is 4000-5000rpm and the stirring time is 10-30min.

11. The method for preparing a lithium iron phosphate power battery according to claim 8, wherein in the third stirring of step 1), a revolution frequency of the dry mixer is 40-45Hz, an autorotation speed is 4000-5000 rpm and the stirring time is 2-3h.

12. The method for preparing a lithium iron phosphate power battery according to claim 8, wherein a dispersing time of the double planetary mixer in step 2) is 0.5-1.5h, the stirring time after adding the graphite powder is 10-30min, the stirring time under vacuum is 0.5-1.5h, a viscosity of the negative active material obtained in step 2) is 500 to 2000mPas.

13. The method for preparing a lithium iron phosphate power battery according to claim 8, wherein the positive conductive agent in step 1) is carbon nanotubes and/or graphene, and a mass content of the positive conductive agent in the positive active material is 1-3%.

14. The method for preparing a lithium iron phosphate power battery according to claim 8, wherein the negative conductive agent in step 2) is selected from a group consisting of conductive carbon black, Ketjenblack and carbon nanotubes, graphene and carbon nanofibers, and a mass content of the negative conductive agent in the negative active material is 1-3%.

15. The method for preparing a lithium iron phosphate power battery according to claim 8, wherein the electrolyte in step 4) comprises a lithium salt, a solvent and an additive, a concentration of the lithium salt is 1-1.3mol/L; the solvent is selected from two to four of propylene carbonate, ethyl acetate, propyl acetate and ethyl propionate, a mass content of the solvent in the electrolyte is 70-85%; the additive is selected from a group consisting of fluorinated ethylene carbonate, propane sultone, vinylene carbonate, bistrifluoromethanesulfonimidate lithium and ethylene sulfate, and a mass content of the additive in the electrolyte is 0.5-5%.
